# EUROPÄISCHE PATENTSCHRIFT

(11) **EP 2 880 339 B1**
(45) Veröffentlichungstag und Bekanntmachung des Hinweises auf die Patenterteilung: **09.08.2017**
(21) Anmeldenummer: 13729624.0
(22) Anmeldetag: 04.06.2013
(51) Int. Cl.: F16H 48/08, F16H 48/40

(54) **KEGELRADDIFFERENTIAL FÜR EIN FAHRZEUG**
BEVEL GEAR WHEEL DIFFERENTIAL FOR A MOTOR VEHICLE
DIFFÉRENTIEL CONIQUE DESTINÉ À UN VÉHICULE

(30) Priorität: 31.07.2012 DE 102012213405
(43) Veröffentlichungstag der Anmeldung: 10.06.2015
(73) Patentinhaber: Schaeffler Technologies AG & Co. KG, 91074 Herzogenaurach (DE)
(72) Erfinder: BIERMANN, Thorsten, 96193 Wachenroth (DE); WILM, Florian, 97720 Nüdlingen (DE)
(86) Internationale Anmeldenummer: PCT/EP2013/061470
(87) Internationale Veröffentlichungsnummer: WO 2014/019743

(56) Entgegenhaltungen:
- WO-A1-2006/125478
- WO-A2-03/067122
- FR-A1- 2 848 635
- GB-A- 2 199 907
- US-B1- 6 976 929

## Beschreibung

### Gebiet der Erfindung

Die Erfindung betrifft ein Kegelraddifferential mit einem Außenrad, mit einem Differenzialkorb, wobei der Differenzialkorb über mindestens einen Verbindungsbereich mit dem Außenrad fest verbunden ist, wobei der Differenzialkorb mindestens einen Stegbereich aufweist, an dem ein Ausgleichsrad angeordnet ist, wobei die Drehachse des Ausgleichsrads in einer axialen Draufsicht auf das Kegelraddifferential eine Ausgleichsachsrichtung definiert.

Kegelraddifferentiale werden in Fahrzeugen oftmals eingesetzt, um ein Antriebsdrehmoment auf zwei Abtriebswellen zu verteilen. Das Kegelraddifferential erlaubt durch Ausgleichszahnräder, dass die beiden Abtriebswellen gegeneinander verdreht werden können, um auf diese Weise z. B. unterschiedliche Winkelgeschwindigkeiten bei Kurvenfahrten von Fahrzeugen ausgleichen zu können. Derartige Kegelraddifferentiale sind als technologischer Hintergrund beispielsweise aus den Druckschriften, US 6 976 929 B1, WO 2006/125478 A1, FR 2 848 635 A1 oder GB 2 199 907 A bekannt.

In der Druckschrift EP 1472475 B1 bzw. deren Familienmitglied WO 03/067122 A2, die den nächstkommenden Stand der Technik bildet, ist ein derartiges Kegelraddifferential gezeigt. Das Kegelraddifferential umfasst ein Differenzialgehäuse, das über einen mit dem Gehäuse fest verbundenen Zahnkranz angetrieben werden kann sowie Ausgleichsräder, die in dem Differenzialgehäuse drehbar gelagert sind, und ergänzend zwei Planetenräder, die ebenfalls im Differenzialgehäuse drehbar gelagert sind, mit denen die Ausgleichsrädern kämmen und auf diese Weise die Abtriebe des Kegelraddifferentials bilden.

Der Erfindung liegt die Aufgabe zugrunde, ein Kegelraddifferential bekannter Bauart weiterzubilden. Diese Aufgabe wird durch ein Kegelraddifferential mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Kegelraddifferential vorgeschlagen, welches für den Einsatz in einem Fahrzeug geeignet und/oder ausgebildet ist. Das Kegelraddifferential kann zum einen als ein Längsdifferenzial ausgebildet sein, mit dem ein Antriebsdrehmoment auf zwei Achsen des Fahrzeugs verteilt werden kann. Bevorzugt ist das Kegelraddifferential jedoch als ein Querdifferenzial oder Achsdifferenzial ausgebildet, wobei ein Antriebsdrehmoment auf zwei Abtriebswellen einer Achse verteilt wird. In alternativen Ausführungsformen kann das Kegelraddifferential auch zur Zusammenführung oder Verteilung von Antriebsdrehmomenten eingesetzt sein.

Das Kegelraddifferential umfasst ein Außenrad, welches besonders bevorzugt als ein stirnseitig umlaufend verzahntes Zahnrad oder als ein Zahnkranz ausgebildet ist. Die Zähne der Verzahnung des Außenrads verlaufen vorzugsweise parallel zu einer Hauptdrehachse, die durch das Außenrad definiert ist. Bevorzugt bildet das Außenrad einen Eingang oder ein Antriebsrad des Kegelraddifferentials.

Das Kegelraddifferential umfasst ferner einen Differenzialkorb - auch Differenzialgehäuse genannt -, wobei der Differenzialkorb über mindestens einen Verbindungsbereich mit dem Außenrad fest verbunden ist. Der Differenzialkorb ist in der Form besonders bevorzugt glockenförmig oder kuppelförmig ausgebildet. Der Differenzialkorb bildet einen Innenraum aus, wobei in dem Innenraum Ausgleichsräder und Abtriebsräder angeordnet sind, welche gemeinsam einen Ausgleichsmechanismus bilden.

Insbesondere weist das Kegelraddifferential zwei derartige Abtriebsräder auf, welche drehfest mit Abtriebswellen gekoppelt und/oder koppelbar sind. Das Kegelraddifferential umfasst bevorzugt mindestens ein derartiges Ausgleichsrad, wobei das Ausgleichsrad mit den beiden Abtriebsrädern kämmt. Ausgleichsrad bzw. -räder und Abtriebsräder sind als Kegelräder ausgebildet. Insbesondere ist die Grundform der Kegelräder jeweils ein Kegelstumpf, dessen Mantelfläche verzahnt ist.

Der Differenzialkorb weist mindestens einen Stegbereich auf, an dem das Ausgleichsrad angeordnet ist. Vorzugsweise trägt der Stegbereich einen Bolzen, auf dem das Ausgleichsrad drehbar gelagert ist.

Zum Zwecke der Definition wird festgelegt, dass in einer axialen Draufsicht in Richtung der Hauptdrehachse des Außenrads auf das Kegelraddifferential die Drehachse des Ausgleichsrads eine Ausgleichsachsrichtung definiert.

Im Rahmen der Erfindung wird vargeschlagen, dass in der gleichen axialen Draufsicht ein Ausgleichswinkelbereich von mindestens +/- 20 Grad um die Ausgleichsachsrichtung von dem mindestens einen Verbindungsbereich freigestellt ist. Bei dem erfindungsgemäßen Kegelraddifferential wird somit beansprucht, dass die Verbindungsbereiche nicht in einem Winkelsegment des Stegbereichs angeordnet sind, sondern außerhalb dieses Winkelsegments angeordnet sind.

Der Erfindung liegt die Überlegung zugrunde, dass über die Stegbereiche die axialen Belastungen und auch Kippmomentbelastungen von dem Differenzialkorb in Richtung des Außenrads abgetragen werden. Jedoch ist der Differenzialkorb im Stegbereich konstruktiv sehr steif ausgebildet, sodass eine Abstützung in dem Winkelsegment des Stegbereichs an dem Außenrad nicht zwingend erforderlich ist. Dagegen werden die Differenzialkörbe oftmals in dem zu den Stegbereichen komplementären Bereichen mit Aussparungen versehen, wobei die Differenzialkörbe in diesen Bereichen eine geringere Biegesteifigkeit aufweisen. Bei der Erfindung werden diese Vorüberlegungen zugrunde gelegt und es wird vorgeschlagen, die Verbindungsbereiche von den ohnehin sehr steifen Stegbereichen in Umlaufrichtung um die Hauptdrehachse zu verschieben und zu den Stegbereichen beabstandet anzuordnen.

Es hat sich dabei gezeigt, dass ein Ausgleichswinkelbereich von mindestens +/- 20 Grad, vorzugsweise von mindestens +/- 30 Grad von Verbindungsbereichen freigestellt verbleiben kann, ohne die Steifigkeit der Baugruppe "Außenrad-Differenzialkorb" negativ zu beeinflussen. Besonders bevorzugt ist der Ausgleichswinkelbereich kleiner als +/- 90°, um den Anbindungsquerschnitt in Umlaufrichtung nicht zu massiv einzuschränken.

Im Ergebnis können durch die Erfindung Verbindungsbereiche eingespart werden, indem auf "Angstverbindungen" in den Stegbereichen verzichtet wird. Die Erfindung verringert somit die Fertigungskosten des Kegelraddifferentials, indem Arbeitsschritte und Verbindungskomponenten eingespart werden können.

Bei einer bevorzugten Ausgestaltung der Erfindung weist der Differenzialkorb mindestens einen Fensterbereich auf. Ein derartiger Fensterbereich liegt in Umlaufrichtung benachbart zu dem mindestens einen Stegbereich und erlaubt eine Gewichtsreduzierung des Differenzialkorbs. In axialer Draufsicht kann dem Fensterbereich eine Mittellinie zugeordnet werden, die den Fensterbereich z.B. hinsichtlich der Ausdehnung in Umlaufrichtung und/oder hinsichtlich der Öffnungsfläche in zwei symmetrische Teile teilt. Die Mittellinie wird als eine Fensterrichtung festgelegt. Um die Fensterrichtung kann ein Fensterwinkelbereich von mindestens +/- 20 Grad definiert werden, wobei die Verbindungsbereiche in dem mindestens einen Fensterwinkelbereich angeordnet sind. Sind mehrere Fensterbereiche in dem Differentialkorb vorgesehen, so werden mehrere Fensterwinkelbereiche definiert, wobei die Verbindungsbereiche auf die Fensterwinkelbereiche verteilt sind. Alternativ kann die Mittellinie als Senkrechte zu der Ausgleichsrichtung definiert werden.

Insbesondere sind die Ausgleichswinkelbereiche und die Fensterwinkelbereiche in Umlaufrichtung nebeneinander, wahlweise beabstandet oder unmittelbar aneinander angrenzend, und/oder nichtüberlappend zueinander angeordnet

Mit dieser bevorzugten Ausgestaltung wird unterstrichen, dass die Verbindungsbereiche in Umlaufrichtung aus den Ausgleichswinkelbereichen in die Fensterwinkelbereiche verschoben werden sollen. Damit wird ausgenutzt, dass die Steifigkeit der Baugruppe "Außenrad-Differenzialkorb" bezüglich der Abdrängung in Achsrichtung in Richtung Stegbereich größer als in Richtung Fensterbereich ist. Bei der konstruktiven Auslegung ist jedoch nur die nachgiebigere Seite, also der Fensterbereich, entscheidend, sodass die Verbindungsbereiche in den nachgiebigeren Bereich gelegt werden.

Bei einer bevorzugten Weiterbildung der Erfindung weist der Differenzialkorb einen um die Hauptdrehachse des Außenrads geschlossen, umlaufenden Ringabschnitt auf. Durch diesen Ringabschnitt wird sichergestellt, dass die Stegbereiche über die in Umlaufrichtung versetzten Verbindungsbereiche axiale Belastungen und Kippbelastungen abführen können.

Bei einer bevorzugten Weiterbildung der Erfindung weist der Ringabschnitt mindestens einen Flanschbereich, der sich in einer Radialebene senkrecht zu der Hauptdrehachse des Außenrads erstreckt, sowie mindestens ein Befestigungselement auf, wobei der mindestens eine Flanschbereich in Umlaufrichtung betrachtet in dem mindestens einen Fensterwinkelbereich angeordnet ist und/oder außerhalb des Ausgleichswinkelbereichs positioniert ist. Der mindestens eine Flanschbereich liegt auf dem Außenrad auf und ist mit diesem über das mindestens eine Befestigungselement verbunden. Durch die Verbindung wird der mindestens eine Verbindungsbereich gebildet.

Es ist besonders bevorzugt, dass das Außenrad mindestens einen Aussparungsbereich aufweist, wobei der Aussparungsbereich mit dem mindestens einen Ausgleichswinkelbereich überlappt und auf dem gleichen Teilkreis oder Durchmesser wie die Verbindungsbereiche angeordnet ist. Durch diese Maßnahme wird erreicht, dass zum einen Material eingespart und zum anderen Gewicht reduziert werden kann. Dieser Weiterbildung liegt die Überlegung zugrunde, dass Bereiche in dem Außenrad in dem Winkelsegment der Stegbereiche aufgrund der Verlegung der Verbindungsbereiche in die Fensterwinkelbereiche bzw. aus den Ausgleichswinkelbereichen heraus nicht mehr notwendig sind und dadurch eingespart werden können. Diese Maßnahme führt zu einer (weiteren) Gewichtsreduzierung und somit zu einer Trägheitsreduzierung.

Es ist sogar besonders bevorzugt, dass sich der Aussparungsbereich in Umlaufrichtung über den gesamten Ausgleichswinkelbereich erstreckt. Somit erstreckt sich der Aussparungsbereich mindestens über +/- 20 Grad um die Ausgleichsachsrichtung. Es ist weiterhin bevorzugt, dass sich der Aussparungsbereich in radialer Richtung zur Hauptdrehachse weiter als der mindestens eine Verbindungsbereich und/oder weiter als der mindestens eine Flanschbereich erstreckt. Auf diese Weise ist es umgesetzt, dass ein großer Flächenbereich des Außenrads frei bleiben kann.

Bei einer bevorzugten konstruktiven Ausgestaltung der Erfindung umfasst der Differenzialkorb zwei Stegbereiche und zwei Fensterbereiche, welche in Umlaufrichtung abwechselnd zueinander angeordnet sind. Jedem Stegbereich ist ein Ausgleichsrad zugeordnet. Insbesondere befindet sich in jedem Stegbereich ein Bolzen zur drehbaren Lagerung des Ausgleichsrads. In dieser Ausgestaltung sind zwei Ausgleichswinkelbereiche definiert, welche sich jeweils um mindestens +/- 20 Grad um die zugeordnete Ausgleichsachsrichtung erstrecken bzw. zwei Fensterwinkelbereiche definiert, welche sich jeweils um +/- 20 Grad um die Fensterrichtung erstrecken. In dieser Ausgestaltung ist das Kegelraddifferential als eine leichte und damit trägheitsreduzierte Baueinheit ausgebildet.

Bei einer bevorzugten Weiterbildung der Erfindung weist das Außenrad eine zentrale, insbesondere abschnittsweise kreisrunde Aussparung, in der der Differenzialkorb eingesetzt ist, sowie zwei Flankenaussparungen auf, die mit dem Fensterwinkelbereich überlappend angeordnet sind, sich an die zentrale Aussparung anschließen und mit dieser einen gemeinsamen Aussparungsbereich bzw. den Aussparungsbereich bilden.

Bei einer bevorzugten Realisierung der Erfindung weist das Außenrad einen umlaufenden Verzahnungsring oder Verzahnungsträger sowie einen planen Innenbereich auf, wobei mindestens 60 % der Fläche des planen Innenbereichs als der Aussparungsbereich ausgebildet ist.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 ein Kegelraddifferential in einer schematischen dreidimensionalen Darstellung;
Figur 2 das Kegelrad in der Figur 1 in einer schematischen Ansicht von der Seite;
Figur 3 das Kegelraddifferential in den Figuren 1 und 2 in einer axialen Draufsicht von der Rückseite.

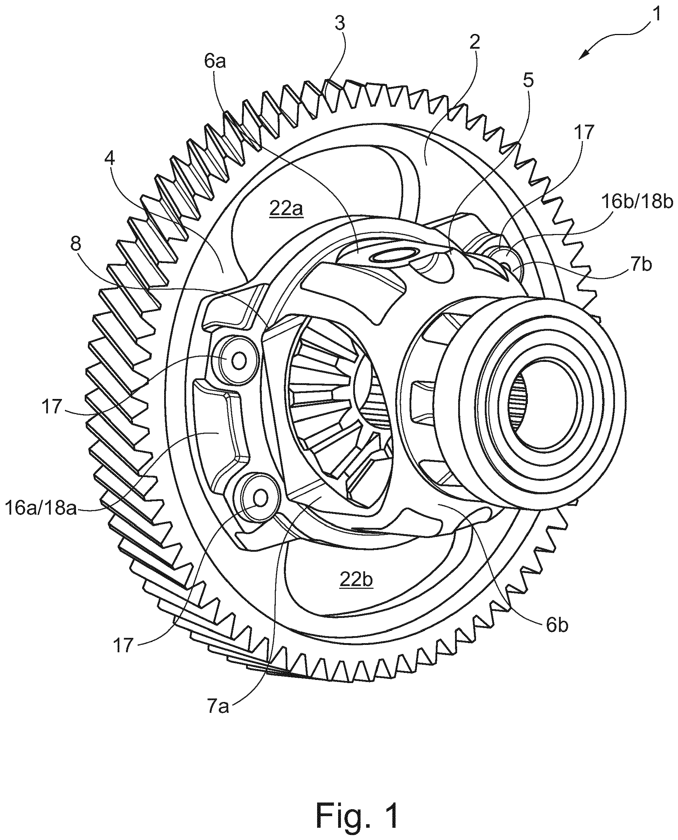

Die Figur 1 zeigt in einer schematischen, dreidimensionalen Darstellung ein Kegelraddifferential 1, welches für ein Fahrzeug ausgebildet ist. Insbesondere dient das Kegelraddifferential 1 dazu, ein Antriebsdrehmoment auf zwei Abtriebswellen (nicht gezeigt) zu verteilen.

Das Kegelraddifferential 1 weist ein Außenrad 2 auf, welches als ein umlaufend, stirnseitig verzahntes Zahnrad bzw. als ein Zahnkranz ausgebildet ist. Das Außenrad 2 umfasst einen verzahnten Außenring 3 sowie einen plattenförmigen Innenbereich 4. Der plattenförmige Innenbereich 4 ist als planer oder ebener Bereich ausgebildet.

Auf dem Außenrad 2 ist ein Differenzialkorb 5 aufgesetzt, wobei der Differenzialkorb 5 als ein glockenförmiges oder kuppelförmiges Gussteil ausgebildet ist. Der Differenzialkorb 5 umfasst zwei Stegbereiche 6 a, b sowie zwei Fensterbereiche 7a,b. Die Stegbereiche 6 a, b sind durch Gehäusebereiche des Differenzialkorbs 5 gebildet. Die Stegbereiche 6 a, b wechseln sich in Umlaufrichtung mit den Fensterbereichen 7 a, b ab.

Der Differenzialkorb 5 umfasst einen umlaufenden Ringabschnitt 8, wobei der Ringabschnitt 8 die Stegbereiche 6 a, b umlaufend auch über die Fensterbereiche 7 a, b verbindet. Die Fensterbereiche 7 a, b sind somit in Umlaufrichtung durch die angrenzenden Stegbereiche 6 a, b und in axialer Richtung von dem Ringabschnitt 8 und von einem Dachbereich des Differentialkorbs 5 begrenzt oder gebildet.

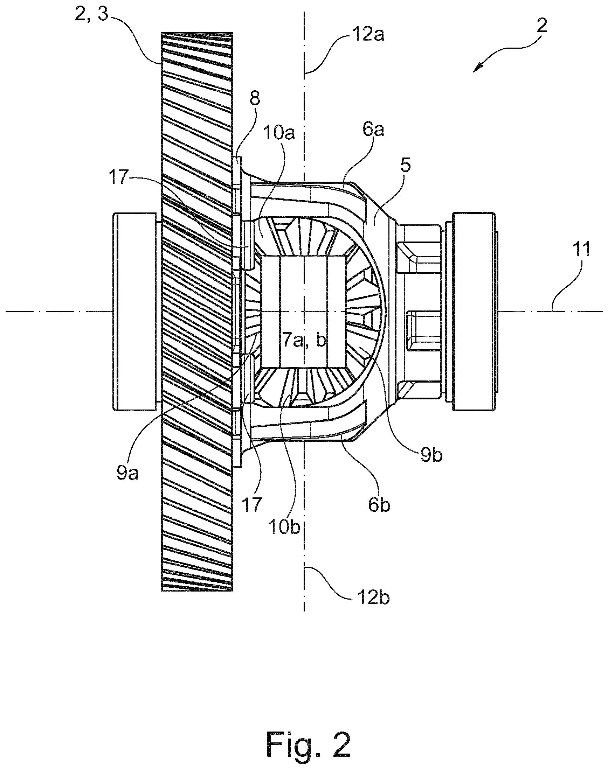

Wie sich insbesondere aus der Figur 2 ergibt, sind in einem Innenraum des Differenzialkorbs 5 zwei Abtriebsräder 9 a, b sowie zwei Ausgleichsräder 10 a, b angeordnet. Die Abtriebsräder 9 a, b liegen koaxial zu einer Hauptdrehachse 11 des Außenrads 2 und sind jeweils mit einer der nicht gezeigten Abtriebswellen verbunden. Die Abtriebsräder 9 a, b sind drehbar in dem Differenzialkorb 5 angeordnet. Jedes der Ausgleichsräder 10 a, b kämmt mit beiden Abtriebsrädern 9 a, b, sodass ein Ausgleichs- oder Differenzialmechanismus geschaffen ist. Die Ausgleichsräder 10 a, b sind über nicht dargestellte Bolzen, welche in den Stegbereichen 6 a, b festgelegt sind, in dem Differenzialkorb 5 drehbar gelagert. Die Rotationen der Ausgleichsräder 10 a, b definieren Drehachsen 12 a, b, welche senkrecht zu der Hauptdrehachse 11 ausgerichtet sind und in einer gemeinsamen Linie liegen.

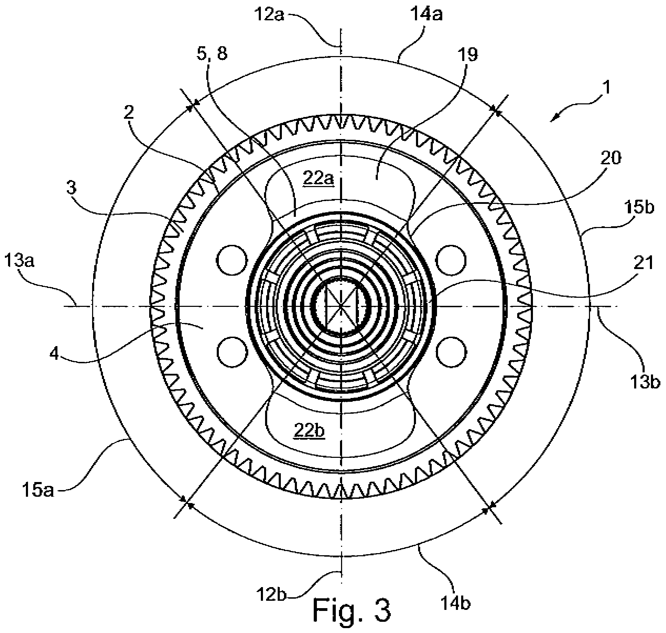

Wie sich insbesondere aus der Figur 3 ergibt, die das Kegelraddifferential 1 in Bezug auf die Hauptdrehachse 11 in einer axialen Draufsicht von der Rückseite zeigt, definieren die Drehachsen 12 a, b Ausgleichsachsrichtungen 12 a, b. Die Ausgleichsachsrichtungen 12 a, b liegen auf einer gemeinsamen Linie, die senkrecht zu der Hauptdrehachse 11 angeordnet ist. Die Fensterbereiche 7a,b können mittig unterteilt werden, sodass in axialer Draufsicht jeweils eine Mittellinie 13a,b zugeordnet werden kann, welche eine Fensterrichtung definiert. Alternativ zu der Definition der Fensterrichtungen können auch Senkrechte zu den Drehachsen 12 a, b als Mittellinie und damit als Fensterrichtungen definiert werden.

Betrachtet man das Außenrad 2 in der Figur 3, so kann das Außenrad 2 in Umlaufrichtung in zwei Ausgleichswinkelbereiche 14 a, b sowie in zwei Fensterwinkelbereiche 15 a, b unterteilt werden. Die Ausgleichswinkelbereiche 14 a, b erstrecken sich in einem Winkelbereich von +/- 40 Grad um die Ausgleichsachsrichtung 12 a, b. Die Fensterwinkelbereiche 15 a, b erstrecken sich dagegen in einem Winkelbereich von +/- 50 Grad um die Fensterrichtung 13 a, b, so dass sich die Ausgleichswinkelbereiche 14 a, b und die Fensterwinkelbereiche 15 a, b zu 360° ergänzen.

Wie sich wieder aus der Figur 1 ergibt, weist der Differenzialkorb 5 Flanschbereiche 16 a, b auf, welche über Befestigungselemente 17, in diesem Beispiel Nieten, mit dem Außenrad 2 verbunden sind und auf diese Weise Verbindungsbereiche 18 a, b bilden.

Es wurde erkannt, dass der Differenzialkorb 5 in den Stegbereichen 6 a, b wesentlich steifer ausgebildet ist, als in den Fensterbereichen 7 a, b. Aufgrund dieser Erkenntnis wurde die Anbindung des Differenzialkorbs 5 an das Außenrad 2 hinsichtlich der (Biege-)Steifigkeit bezüglich der axialen Abdrängung des Außenrands 2 durch Verkippung angepasst. Dabei wurde berücksichtigt, dass bei der Auslegung nur oder im wesentlichen die nachgiebigere Seite, nämlich die Fensterseite, entscheidend ist. Aufbauend auf diesen Überlegungen wurden Materialeinsparungen auf Kosten der Verringerung der Steifigkeit des Kegelraddifferentials 1 in Stegrichtung durchgeführt, indem eine Materialwegnahme am Differenzialkorb 5 und eine Materialwegnahme an dem Außenrad 2 erfolgt sind. Ferner wurden Verbindungselemente (Schrauben, Nieten, etc.) im Bereich des weggenommenen Materials eingespart.

Betrachtet man das Kegelraddifferenzial 1 in einer Zusammenschau der Figuren 1 und 3, so ist zu erkennen, dass die Befestigungselemente 17 und damit die Verbindungsbereiche 18 a, b in Umlaufrichtung um die Hauptdrehachse 11 außerhalb der Ausgleichswinkelbereiche 14 a, b angeordnet sind. Insbesondere sind die Befestigungselemente 17 in einem noch kleineren Winkelsegment um die Ausgleichsachsrichtung 13 a, b, nämlich in einem Winkelsegment von +/- 30 Grad um die Ausgleichsachsrichtung 13 a, b angeordnet.

Das Außenrad 2 weist im plattenförmigen Innenbereich 4 einen zusammenhängenden Aussparungsbereich 19 auf, welcher neben einer zentralen Lochaussparung 20 zur formschlüssigen Aufnahme eines Kragens 21 des Differenzialkorbs 5 zwei sich in radialer Richtung zu der Hauptdrehachse 11 erstreckende Nebenbereiche 22 a, b umfasst. Die Nebenbereiche 22 a, b erstrecken sich im Teilkreisdurchmesser des Ringabschnitts 8 vor Beginn der Flanschbereiche 16 a, b über das gesamte Winkelsegment des Ausgleichswinkelbereichs 14a,b. Im weiteren radialen Verlauf erstrecken sich die Nebenbereiche 22 a, b im Teilkreisdurchmesser der Befestigungselemente 17 über ein Winkelsegment von +/- 35 Grad um die Drehachsen 12 a, b. Im weiteren radialen Verlauf erstrecken sich die Nebenbereiche 22 a, b weiter als der Außendurchmesser, der durch die Befestigungselemente 17 oder die Flanschbereiche 16 a, b definiert ist. Durch die Aussparung 19 kann somit eine deutliche Materialwegnahme am Außenrad 2 und damit verbunden eine Gewichtseinsparung bzw. Trägheitsreduzierung des Kegelraddifferenzials 1 erreicht werden.

Auch die Flanschbereiche 16 a, b sind in Umlaufrichtung nur abschnittsweise realisiert, sodass auch am Differenzialkorb 5 eine Materialwegnahme erfolgt ist. Insbesondere sind die Flanschbereiche 5 außerhalb der Ausgleichswinkelbereiche 14 a, b und/oder innerhalb der Fensterwinkelbereiche 15 a, b angeordnet.

### Bezugszeichen liste

- 1: Kegelraddifferential
- 2: Außenrad
- 3: Außenring
- 4: plattenförmiger Innenbereich
- 5: Differentialkorb
- 6 a, b: Stegbereiche
- 7 a, b: Fensterbereiche
- 8: Ringabschnitt
- 9 a, b: Abtriebsräder
- 10 a, b: Ausgleichsräder
- 11: Hauptdrehachse
- 12 a, b: Drehachsen
- 13 a, b: Mittellinie der Fensterbereiche
- 14 a, b: Ausgleichswinkelbereiche
- 15 a, b: Fensterwinkelbereiche
- 16 a, b: Flanschbereiche
- 17: Befestigungselemente
- 18 a, b: Verbindungsbereiche
- 19: Aussparungsbereich
- 20: Lochaussparung
- 21: Kragen
- 22 a, b: Nebenbereiche

## Patentansprüche

1. Kegelraddifferential (1) mit einem Außenrad (2), mit einem Differentialkorb (5), wobei der Differentialkorb (5) über mindestens einen Verbindungsbereich (18 a, 18 b) mit dem Außenrad (2) fest verbunden ist, wobei der Differentialkorb (5) mindestens einen Stegbereich (6 a, 6 b) aufweist, an dem ein Ausgleichsrad (10 a, 10 b) angeordnet ist, wobei die Drehachse (12 a, 12 b) des Ausgleichsrads (10 a, 10 b) in einer axialer Draufsicht auf das Kegelraddifferential (1) eine Ausgleichsachsrichtung (12a, 12b) definiert, **dadurch gekennzeichnet, dass** in der axialen Draufsicht ein Ausgleichswinkelbereich (14 a, 14 b) von mindestens +/- 20° um die Ausgleichsachsrichtung (12 a, 12 b) ein Winkelsegment des Stegbereichs (6 a, 6 b) bildet und von dem mindestens einen Verbindungsbereich (18 a, b) freigestellt ist, so dass der mindestens eine Verbindungsbereich (18 a, 18 b) außerhalb des Winkelsegments des Stegbereichs (6 a, 6 b) angeordnet ist.

2. Kegelraddifferential (1) nach Anspruch 1, **dadurch gekennzeichnet, dass** der Differentialkorb (5) mindestens einen Fensterbereich (7 a, 7 b) aufweist, wobei in axialer Draufsicht eine Mittellinie (13 a, 13 b) des Fensterbereichs (7 a, 7 b) eine Fensterrichtung und um die Fensterrichtung einen Fensterwinkelbereich (15 a, 15 b) von mindestens +/- 20° definiert ist, wobei die Verbindungsbereiche (18 a, 18 b) in dem mindestens einen Fensterwinkelbereich (15 a, 15 b) angeordnet sind.

3. Kegelraddifferential (1) nach Anspruch 1 oder 2, **dadurch gekennzeichnet, dass** der Differentialkorb (5) einen um eine Hauptdrehachse (11) des Außenrads (2) geschlossen umlaufenden Ringabschnitt (8) aufweist.

4. Kegelraddifferential (1) nach Anspruch 3, **dadurch gekennzeichnet, dass** der Ringabschnitt (8) mindestens einen Flanschbereich (16 a, 16 b) und mindestens ein Befestigungselement (17) aufweist, wobei der mindestens eine Flanschbereich (16 a, 16 b) in Umlaufrichtung in dem mindestens einen Fensterwinkelbereich (15 a, 15 b) angeordnet ist, auf dem Außenrad (2) aufliegt und über das Befestigungselement (17) mit dem Außenrad verbunden ist, so dass der mindestens eine Verbindungsbereich (18 a, 18 b) gebildet ist.

5. Kegelraddifferential (1) nach einem der vorhergehenden Ansprüche, **dadurch gekennzeichnet, dass** das Außenrad (2) mindestens einen Aussparungsbereich (19) aufweist, wobei der Aussparungsbereich (19) mit dem mindestens einen Ausgleichswinkelbereich (14 a, 14 b) überlappt und auf dem gleichen Teilkreis wie die Verbindungsbereiche (18 a, 18 b) und/oder die Befestigungselemente (17) angeordnet ist.

6. Kegelraddifferential (1) nach Anspruch 5, **dadurch gekennzeichnet, dass** sich der Aussparungsbereich (19) in Umlaufrichtung über den gesamten Ausgleichswinkelbereich (14 a, 14 b) erstreckt.

7. Kegelraddifferential (1) nach Anspruch 5 oder 6, dadurch **gekennzeichet**, dass sich der Aussparungsbereich (19) in radialer Richtung weiter als der mindestens eine Verbindungsbereich (18 a, 18 b) und/oder der mindestens eine Flanschbereich (16 a, 16 b) erstreckt.

8. Kegelraddifferential (1) nach einem der vorhergehenden Ansprüche, **dadurch gekennzeichnet, dass** der Differentialkorb (5) zwei Stegbereiche (6 a, 6 b) und zwei Fensterbereiche (7 a, 7 b) aufweist, wobei sich die Ausgleichswinkelbereiche (14 a, 14 b) jeweils um mindestens +/-20° um die zugeordnete Ausgleichsachsrichtung und wobei sich die Fensterwinkelbereiche (15 a, 15 b) jeweils um mindestens +/-20° um die Mittellinien erstrecken.

9. Kegelraddifferential (1) nach Anspruch 8, **dadurch gekennzeichnet, dass** das Außenrad (2) eine zentrale Aussparung (20), in der der Differentialkorb (5) eingesetzt ist, sowie zwei Flankenaussparungen (22 a, 22 b) aufweist, die mit dem Fensterwinkelbereich (15 a, 15 b) überlappend angeordnet sind, sich an der zentralen Aussparung (20) anschließen und gemeinsam mit dieser einen oder den Aussparungsbereich (19) bilden.

10. Kegelraddifferential (1) nach Anspruch 9, **dadurch gekennzeichnet, dass** das Außenrad (2) einen umlaufenden Verzahnungsring (3) und einen Innenbereich (4) aufweist, **dadurch gekennzeichnet, dass** mindestens 60% der Fläche des Innenbereichs (4) als der Aussparungsbereich (19) ausgebildet ist.

## Claims

1. Bevel gear differential (1) having an outer gear (2), having a differential cage (5), the differential cage (5) being connected fixedly to the outer gear (2) via at least one connecting region (18 a, 18 b), the differential cage (5) having at least one spider region (6 a, 6 b), on which a differential gear (10 a, 10 b) is arranged, the rotational axis (12 a, 12 b) of the differential gear (10 a, 10 b) defining a differential axial direction (12 a, 12 b) in an axial plan view of the bevel gear differential (1), **characterized in that**, in the axial plan view, a differential angular region (14 a, 14 b) of at least ± 20° about the differential axial direction (12 a, 12 b) forms an angular segment of the spider region (6 a, 6 b) and is cropped from the at least one connecting region (18 a, b), with the result that the at least one connecting region (18 a, 18 b) is arranged outside the angular segment of the spider region (6 a, 6 b).

2. Bevel gear differential (1) according to Claim 1, **characterized in that** the differential cage (5) has at least one window region (7 a, 7 b), a centre line (13 a, 13 b) of the window region (7 a, 7 b) in axial plan view a window direction and, around the window direction, a window angular region (15 a, 15 b) of at least ± 20° being defined, the connecting regions (18 a, 18 b) being arranged in the at least one window angular region (15 a, 15 b).

3. Bevel gear differential (1) according to Claim 1 or 2, **characterized in that** the differential cage (5) has an annular section (8) which is circumferential in a closed manner about a main rotational axis (11) of the outer gear (2).

4. Bevel gear differential (1) according to Claim 3, **characterized in that** the annular section (8) has at least one flange region (16 a, 16 b) and at least one fastening element (17), the at least one flange region (16 a, 16 b) being arranged in the circulating direction in the at least one window angular region (15 a, 15 b), on which the outer gear (2) lies, and being connected via the fastening element (17) to the outer gear, with the result that the at least one connecting region (18 a, 18 b) is formed.

5. Bevel gear differential (1) according to one of the preceding claims, **characterized in that** the outer gear (2) has at least one cut-out region (19), the cut-out region (19) overlapping with the at least one differential angular region (14 a, 14 b) and being arranged on the same partial circle as the connecting regions (18 a, 18 b) and/or the fastening elements (17).

6. Bevel gear differential (1) according to Claim 5, **characterized in that** the cut-out region (19) extends in the circulating direction over the entire differential angular region (14 a, 14 b).

7. Bevel gear differential (1) according to Claim 5 or 6, **characterized in that** the cut-out region (19) extends further in the radial direction than the at least one connecting region (18 a, 18 b) and/or the at least one flange region (16 a, 16 b).

8. Bevel gear differential (1) according to one of the preceding claims, **characterized in that** the differential cage (5) has two spider regions (6 a, 6 b) and two window regions (7 a, 7 b), the differential angular regions (14 a, 14 b) extending in each case by at least ± 20° about the associated differential axial direction, and the window angular regions (15 a, 15 b) extending in each case by at least ± 20° about the centre lines.

9. Bevel gear differential (1) according to Claim 8, **characterized in that** the outer gear (2) has a central cut-out (20), in which the differential cage (5) is inserted, and two flank cut-outs (22 a, 22 b) which are arranged so as to overlap with the window angular region (15 a, 15 b), adjoin the central cut-out (20) and, together with the latter, form a or the cut-out region (19).

10. Bevel gear differential (1) according to Claim 9, **characterized in that** the outer gear (2) has a circumferential toothing ring (3) and an inner region (4), **characterized in that** at least 60% of the area of the inner region (4) is configured as the cut-out region (19).

## Revendications

1. Différentiel conique (1) comprenant un pignon extérieur (2) avec une coquille de différentiel (5), la coquille de différentiel (5) étant connectée fixement au pignon extérieur (2) par le biais d'au moins une région de connexion (18a, 18b), la coquille de différentiel (5) présentant au moins une région de porte-satellites (6a, 6b) au niveau de laquelle est disposé un pignon d'équilibrage (10a, 10b), l'axe de rotation (12a, 12b) du pignon d'équilibrage (10a, 10b) définissant une direction d'axe d'équilibrage (12a, 12b) en vue de dessus axiale sur le différentiel conique (1),
**caractérisé en ce qu'**en vue de dessus axiale, une plage angulaire d'équilibrage (14a, 14b) d'au moins ± 20° autour de la direction de l'axe d'équilibrage (12a, 12b) forme un segment angulaire de la région de porte-satellites (6a, 6b) et est exempte de l'au moins une région de connexion (18a, b) de telle sorte que l'au moins une région de connexion (18a, 18b) soit disposée à l'extérieur du segment angulaire de la région de porte-satellites (6a, 6b).

2. Différentiel conique (1) selon la revendication 1, **caractérisé en ce que** la coquille de différentiel (5) présente au moins une région de fenêtre (7a, 7b), un axe médian (13a, 13b) de la région de fenêtre (7a, 7b) en vue de dessus axiale, une direction de fenêtre, et autour de la direction de fenêtre, une plage angulaire de fenêtre (15a, 15b) d'au moins ± 20° étant définis, les régions de connexion (18a, 18b) étant disposées dans l'au moins une plage angulaire de fenêtre (15a, 15b).

3. Différentiel conique (1) selon la revendication 1 ou 2, **caractérisé en ce que** la coquille de différentiel (5) présente une portion annulaire (8) périphérique fermée autour d'un axe de rotation principal (11) du pignon extérieur (2).

4. Différentiel conique (1) selon la revendication 3, **caractérisé en ce que** la portion annulaire (8) présente au moins une région de bride (16a, 16b) et au moins un élément de fixation (17), l'au moins une région de bride (16a, 16b) étant disposée dans la direction périphérique dans l'au moins une plage angulaire de fenêtre (15a, 15b), reposant sur le pignon extérieur (2) et étant connectée au pignon extérieur par le biais de l'élément de fixation (17) de telle sorte que l'au moins une région de connexion (18a, 18b) soit formée.

5. Différentiel conique (1) selon l'une quelconque des revendications précédentes, **caractérisé en ce que** le pignon extérieur (2) présente au moins une région d'évidement (19), la région d'évidement (19) chevauchant l'au moins une plage angulaire d'équilibrage (14a, 14b) et étant disposée sur le même cercle partiel que les régions de connexion (18a, 18b) et/ou les éléments de fixation (17).

6. Différentiel conique (1) selon la revendication 5, **caractérisé en ce que** la région d'évidement (19) s'étend dans la direction périphérique sur toute la plage angulaire d'équilibrage (14a, 14b).

7. Différentiel conique (1) selon la revendication 5 ou 6, **caractérisé en ce que** la région d'évidement (19) s'étend dans la direction radiale plus loin que l'au moins une région de connexion (18a, 18b) et/ou l'au moins une région de bride (16a, 16b).

8. Différentiel conique (1) selon l'une quelconque des revendications précédentes, **caractérisé en ce que** la coquille de différentiel (5) présente deux régions de porte-satellites (6a, 6b) et deux régions de fenêtre (7a, 7b), les plages angulaires d'équilibrage (14a, 14b) s'étendant à chaque fois sur au moins +- 20° autour de la direction d'un axe d'équilibrage associé et les plages angulaires de fenêtre (15a, 15b) s'étendant à chaque fois sur au moins +- 20° autour des axes médians.

9. Différentiel conique (1) selon la revendication 8, **caractérisé en ce que** le pignon extérieur (2) présente un évidement central (20) dans lequel est insérée la coquille de différentiel (5) ainsi que deux évidements de flanc (22a, 22b), qui sont disposés de manière à chevaucher la plage angulaire de fenêtre (15a, 15b), se raccordent à l'évidement central (20) et forment conjointement avec celui-ci une ou la région d'évidement (19).

10. Différentiel conique (1) selon la revendication 9, **caractérisé en ce que** le pignon extérieur (2) présente une couronne dentée périphérique (3) et une région intérieure (4), **caractérisé en ce qu'**au moins 60 % de la surface de la région intérieure (4) sont réalisés sous forme de la région d'évidement (19).
